# EUROPÄISCHE PATENTANMELDUNG

(11) **EP 0 962 128 A2**
(43) Veröffentlichungstag der Anmeldung: **08.12.1999**
(21) Anmeldenummer: 99110689.9
(22) Anmeldetag: 02.06.1999
(51) Int. Cl.: A01F 15/00, A01F 15/04

(54) **Herstellung von Ballen, Rundballen**

(30) Priorität: 03.06.1998 IT RN980023; 10.09.1998 IT RN980032
(71) Anmelder: Massimo Carli, 47900 Rimini (IT)
(72) Erfinder: Massimo Carli, 47900 Rimini (IT)
(74) Vertreter: Gustorf, Gerhard, Dipl.-Ing.

(57) **Zusammenfassung**

Um bei gepressten Ballen (5), Rollen, Preßpacken oder dergleichen eine bessere Belüftung und Wärmeabfuhr zu ermöglichen, sind die Ballen (5) oder dergleichen mit Hohlräumen (9, 10, 10', 11) versehen, die an der Außenseite des Ballens (5) oder im Inneren ausgebildet sein können. Auf diese Weise wird die Gefahr einer übermäßigen Erhitzung des Ballens (5) vermieden.

## Beschreibung

Die Erfindung bezieht sich auf Ballen, große Rollen und Preßpacken.

Insbesondere betrifft die Erfindung solche Ballen, die derart hergestellt werden, daß sie so abgelegt, gestapelt oder gespeichert werden können, ohne daß sich in ihnen Überhitzungseffekte einstellen, die zu einer Schädigung aufgrund von Fermentation führen.

In der folgenden Beschreibung werden zur Vereinfachung die Ballen, Rollen oder Preßpacken als "Produkte" bezeichnet.

Die Ballen und dergleichen bestehen im allgemeinen aus Faserstoffen, beispielsweise Leguminosen, Gramineen oder Viehfutter oder aus Fabrikationsabfällen und Abfallprodukten im allgemeinen.

Eine wesentliche Aufgabe der Erfindung besteht darin, bei diesen Produkten eine bessere Belüftung und Abkühlung zu gewährleisten, insbesondere in den inneren Teilen der Materialanhäufungen, wo es am schwierigsten ist, die Feuchtigkeit in natürlicher Weise auszutreiben, die den für die schadensfreie Erhaltung des Produktes notwendigen Feuchtigkeitsgehalt übersteigt, und wo die Abführung der Wärme am problematischsten ist, welche sich aufgrund von Fermentation oder vorangegangener Bearbeitung entwickelt.

Bei der Bearbeitung und Behandlung von Leguminosen, Gramineen und den unterschiedlichsten Futterarten ist es erforderlich, daß das Endprodukt bei entsprechender Lagerung haltbar bleibt, ohne sich zu überhitzen, um eine Schädigung des Produktes und möglicherweise auch gefährliche Selbstentzündungen zu vermeiden. Damit das Material, aus dem die Ballen, Rollen oder Preßpacken hergestellt werden, haltbar bleibt, muß sichergestellt sein, daß es vor der Verpackung oder Magazinierung eine ausreichend geringe Feuchtigkeit aufweist.

Beim gegenwärtigen Stand der Technik ist es jedoch praktisch unmöglich, die Gefahr vollständig zu beseitigen, daß ein Teil des Materials eine unzulässige Feuchtigkeit und/oder Temperatur hat. Im Anschluß an die Bildung der Ballen stellt sich ein natürlicher Reifeprozeß des Materials ein, der aufgrund seiner automatischen und leichten Selbsterwärmung beginnt, über einen Ausdünstungsprozeß Feuchtigkeit und Wärme an die Umgebung abzugeben, bis sich theoretisch ein Gleichgewicht einstellt, welches die Haltbarkeit gewährleistet. Aufgrund der unzureichenden Ausdünstung ist den inneren Bereichen der Materialanhäufungen wird dieser Reifeprozeß jedoch behindert, da beim gegenwärtigen Stand der Technik die Außenflächen der Produkte glatt sind oder allenfalls kleine Unregelmäßigkeiten aufweisen. Daraus folgt, daß nach einem Stapeln oder Nebeneinanderlegen der Ballen deren Außenseiten eng aneinander liegen, wodurch der erforderliche Ausdünstungsprozeß behindert wird. Wie bereits erwähnt, ist dies die Ursache für eine übermäßige Wärmespeicherung, die zu einer Schädigung des Produktes führt, häufig sogar zu gefährlichen Selbstentzündungen und Bränden mit der Folge erheblicher wirtschaftlicher Schäden und Umweltbelastungen.

Der Erfindung liegt daher die Aufgabe zugrunde, die Gefahr der Schädigung und Selbstentzündung des Produktes auszuschließen, das in der oben erläuterten Weise behandelt worden ist.

Gemäß der Erfindung wird diese Aufgabe bei Ballen, Rollen oder Preßpacken dadurch vermieden, daß diese wenigstens eine Vertiefung beliebiger Abmessungen und geometrischer Formen hat, welche in einen Teil der Außenfläche des Ballens, der Rolle oder des Preßpackens eingearbeitet ist.

Zur Lösung der Aufgabe dienen ferner ein Verfahren und eine Vorrichtung zur Herstellung der Ballen, Rollen und Preßpacken, bei denen Arbeitsmittel vorgesehen sind, die während der Ballenbildung in den Formationsbereich eingreifen, um wenigstens eine Vertiefung zu formen, die beliebige Abmessungen und geometrische Ausbildungen haben kann und in die Oberfläche des Ballens eingearbeitet wird.

Die Erfindung ist nachstehend an einem Ausführungsbeispiel erläutert, das in der Zeichnung dargestellt ist. Es zeigen:
Figur 1 eine teilweise geschnittene Seitenansicht einer Vorrichtung zum Pressen von Ballen,
Figur 2 die Stirnansicht der Vorrichtung gemäß Figur 1 zur Darstellung des Austrittskanals,
Figur 3 die perspektivische Ansicht eines gemäß der Erfindung hergestellten Ballens und
Figur 4 einen Stapel von Ballen, die gemäß der Erfindung (Figur 3) hergestellt sind.

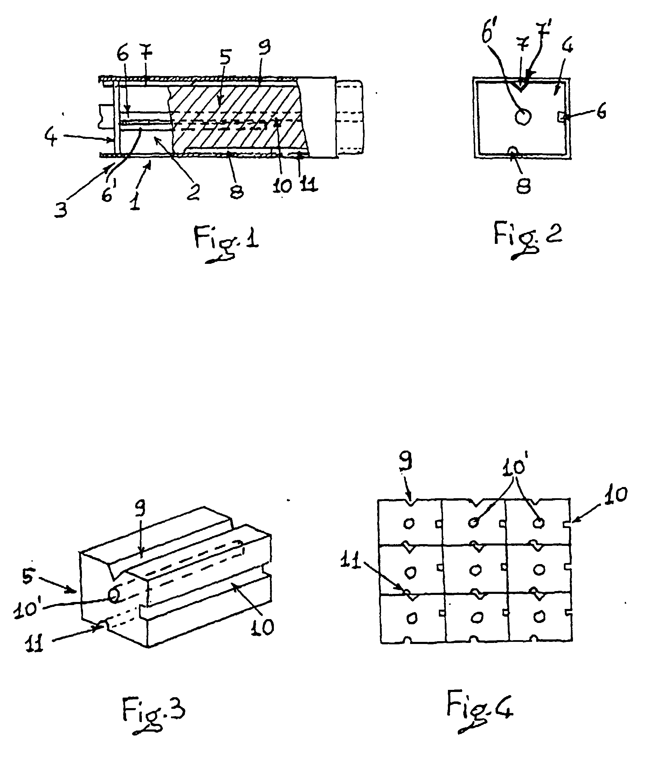

In Figur 1 ist die Seitenansicht einer Vorrichtung zum Pressen von Ballen 5, Rollen oder dergleichen dargestellt. Diese Vorrichtung kann fest installiert oder transportabel sein und besteht im Ausführungsbeispiel aus einer hydraulischen Presse mit einer Druckplatte 4, die von einem nur teilweise dargestellten, hydraulischen Kolben betätigt wird. Als Antriebseinrichtung können statt dessen auch Kurbelstangen, Hebelgetriebe oder dergleichen vorgesehen sein. Zur Vereinfachung werden nachstehend die Ballen, Rollen oder Preßpacken vorwiegend kurz als Ballen 5 bezeichnet.

Das lose Material, aus dem die Ballen 5 gebildet werden, besteht beispielsweise aus Leguminosen, Gramineen, Viehfutter oder dergleichen, welches sowohl an der Sonne getrocknet als auch in entsprechenden Einrichtungen dehydratisiert werden kann. Als Material kommen weiterhin in Frage Faserstoffe, Fabrikationsabfälle oder Abfallprodukte im allgemeinen. Dieses Material wird durch eine Eintrittskammer 1 in eine Kompressionszone 2 gegeben, die sich in der Presse 3 befindet. Bevor die Druckplatte 4 einen Kompressionszyklus beginnt, verteilt sich das Material in der Kompressionszone 2 und nimmt dabei alle zur Verfügung stehenden Leerräume ein. Durch die Druckeinwirkung der Druckplatte 4 wird das Material zu einem Ballen 5 gepreßt und in Richtung auf den Ausgang der Presse 3 gedrückt.

An bestimmten Bereichen der Innenfläche, welche die Kompressionszone 2 begrenzt, sind fest oder abnehmbar Bearbeitungs- oder Formelemente angebracht, die aus Spitzen 7 oder Vorsprüngen 8 bestehen können, wobei im Ausführungsbeispiel zwei dieser Elemente gezeigt sind. Diese erstrecken sich entlang der Innenwand in Längsrichtung parallel zur Verschieberichtung des Kolbens. Figur 1 zeigt als Beispiel, daß die Spitze 7 über die gesamte Länge einer Innenwand der Kompressionszone 2 verläuft und sich durch eine entsprechende Aussparung der Druckplatte 4 erstreckt, während der Vorsprung 8 nur in einen begrenzten Bereich der Kompressionszone 2 angebracht ist, in welchen die Druckplatte 4 nicht eintritt.

Beim Kompressionsvorgang werden auf diese Weise innerhalb der Presse 3 durch die Spitzen 8 und Vorsprünge 9 an der Außenseite des Ballens 5 Vertiefungen 10 bzw. 11 gebildet, die an den Ballen 5 verbleiben, wenn dieser fertiggestellt ist. Diese Vertiefungen 10 und 11 bestehen aus Furchen, die im wesentlichen tangential zu dem Ballen 5 verlaufen und die beliebige Abmessungen und geometrische Querschnitte haben und untereinander verschieden ausgebildet sein können, wobei sie in einem Bereich oder in mehreren Bereichen der Mantelfläche des Ballens 5 ausgebildet sein können.

Im Ausführungsbeispiel ist ferner vorgesehen, daß an der Druckplatte 4 der Presse 3 weitere Bearbeitungselemente angebracht sein können, die sich von der Druckplatte 4 rechtwinklig in die Kompressionszone 2 erstrecken. Diese Bearbeitungselemente können aus einem oder mehreren Ansätzen 6 bzw. 6' bestehen, welche zusätzlich zu den Spitzen 7 und Vorsprüngen 8 oder alternativ zu diesen vorgesehen sein können. Der Ansatz 6 liegt im Ausführungsbeispiel in der Nähe der Innenwand der Kompressionszone 2 der Presse 3, während sich der Ansatz 6' von einem mittleren Bereich der Druckplatte 4 in das Innere der Kompressionszone 2 erstreckt.

Während des Arbeitshubs der Druckplatte 4 erzeugen die Ansätze 6, 6' in dem Ballen 5 Vertiefungen 10 bzw. 10', wobei die Vertiefung 10 an der Außenseite des Ballens 5 verläuft und die Vertiefung 10' ein Loch in der Mitte des Ballens 5 bildet. Die Vertiefung 10' kann sich dabei durch einen Teil des Ballens 5 hindurch erstrecken oder auch in diesem ein Durchgangsloch bilden. Durch geeignete Wahl der Länge der Ansätze 6, 6' können diskontinuierliche Vertiefungen 10, 10' ausgebildet werden.

In Figur 2 ist angedeutet, daß die Ansätze 6, 6' sowie die Spitzen und Vorsprünge 7 bzw. 8 jede beliebige Form aufweisen und untereinander verschieden ausgebildet sein können. Wie bereits erwähnt, hat hier die Druckplatte 4 eine Randaussparung 7', durch welche die spitze 7 hindurchläuft. Entsprechend den unterschiedlichen Formen der Vorsprünge 6, 6', 7 und 8 haben auch die Vertiefungen 9, 10, 10' und 11 an bzw. in dem Ballen 5 unterschiedliche Querschnitte (vgl. Figuren 3 und 4), die dreieckig, rechteckig, rund oder halbrund sein können.

In Figur 4 ist dargestellt, daß die in dieser Weise hergestellten Ballen nach ihrer Stapelung nebeneinander und übereinander mit ihren Vertiefungen 9, 10, 10' und 11 Belüftungszonen bilden, die einen Abtransport von Wärme und Feuchtigkeit erlauben und begünstigen.

Aus der Beschreibung des Ausführungsbeispiels ergibt sich, daß die Ballen 5 nach dem Preßvorgang durch die Vorsprünge, Spitzen, Ansätze oder dergleichen eine oder mehrere Vertiefungen erhalten haben, die an einer oder an mehreren Seiten der Oberfläche und/oder in dem Ballen ausgebildet sind.

Bei einer Variante der Erfindung ist es möglich, die Vertiefungen 9, 10, 10' und 11 in bereits gebildete Ballen 5 einzuarbeiten, wobei ähnliche Bearbeitungswerkzeuge in Form von Ansätzen, Spitzen oder Vorsprüngen 6, 6', 7, 8 dienen können.

Mit der Erfindung ist die ihr zugrundeliegende Aufgabe vollständig gelöst, da die Ballen 5 auch in größeren Stapeln nicht Gefahr laufen, daß sich eine Überhitzung einstellt, die zur Schädigung oder gar zur Selbstentzündung des Ballens führen könnte.

Abschließend sei noch erwähnt, daß bei einer geringen Konsistenz des Ausgangsmaterials die Vertiefungen 9, 10, 10' und 11 dazu neigen könnten, sich nach der Bildung des Ballens 5 zumindest teilweise wieder zu schließen. Selbst in diesem Falle würden jedoch in dem Ballen 5 Bereiche verbleiben, die eine geringere Dichte als der übrige Teil des Ballens 5 haben, wodurch eine ausreichende Belüftung weiterhin gewährleistet ist.

## Patentansprüche

1. Ballen, Rolle, Preßpacken oder dergleichen, gekennzeichnet durch wenigstens eine Vertiefung (9, 10, 10', 11) beliebiger Abmessungen und Form, die in einen Bereich der Außenfläche des Ballens (5) oder dergleichen eingearbeitet ist.

2. Ballen oder dergleichen nach Anspruch 1, dadurch gekennzeichnet, daß die Vertiefungen (9, 10, 10', 11) bei der Bildung des Ballens (5) oder dergleichen eingearbeitet werden.

3. Ballen oder dergleichen nach Anspruch 1, dadurch gekennzeichnet, daß die Vertiefungen (9, 10, 10', 11) im Anschluß an die Bildung des Ballens (5) oder dergleichen eingearbeitet werden.

4. Ballen oder dergleichen nach einem der vorhergehenden Ansprüche, dadurch gekennzeichnet, daß die Vertiefungen (10') beliebiger Abmessungen und Formen innerhalb des Ballens (5) ausgebildet sind und sich nur über einen Teil der Länge des Ballens (5) erstrecken.

5. Ballen oder dergleichen nach einen der Ansprüche 1 bis 3, dadurch gekennzeichnet, daß die Vertiefungen (10') beliebiger Abmessungen und Formen innerhalb des Ballens (5) ausgebildet sind und sich durch diesen hindurch erstrecken.

6. Ballen oder dergleichen nach einem der vorhergehenden Ansprüche, dadurch gekennzeichnet, daß die Vertiefungen (9, 10, 10', 11) aus im wesentlichen tangentialen Furchen bestehen, die beliebige Abmessungen und Formen haben können und an einer oder mehreren Bereichen der Außenseite des Ballens (5) ausgebildet sind.

7. Ballen oder dergleichen nach einem der vorhergehenden Ansprüche, dadurch gekennzeichent, daß dieser aus Leguminosen, Gramineen oder Viehfutter im allgemeinen besteht, der an der Luft oder in hierfür vorgesehen Anlagen getrocknet ist.

8. Ballen oder dergleichen nach einem der Ansprüche 1 bis 6, dadurch gekennzeichnet, daß dieser aus Faserstoffen, Fabrikationsabfällen oder Abfallprodukten im allgemeinen besteht.

9. Ballen oder dergleichen nach einem der vorhergehenden Ansprüche, dadurch gekennzeichnet, daß dieser wenigstens zwei Vertiefungen (9, 10, 10', 11) aufweist, ausgewählt aus den Gruppen: Vertiefung (10') als Blindloch innerhalb des Ballens (5), Vertiefung (10') als Durchgangsloch in dem Ballen (5), Vertiefung (9, 10, 11) in einem oder mehreren Bereichen der Außenseite des Ballens (5).

10. Ballen oder dergleichen nach einem der vorhergehenden Ansprüche, dadurch gekennzeichnet, daß die Vertiefungen (9, 10, 10', 11) des Ballens (5) untereinander unterschiedliche Abmessungen und Formen haben.

11. Verfahren zum Herstellen eines Ballens, einer Rolle, eines Preßpackens oder dergleichen, gekennzeichnet durch den Einsatz von Bearbeitungselementen (6, 6', 7, 8), die bei der Bildung des Ballens (5) oder dergleichen in die Bildungszone des Ballens (5) eingreifen und wenigstens eine Vertiefung (9, 10, 10', 11) bilden, die beliebige Abmessungen und Größen im entsprechenden Oberflächenbereich des Ballens (5) hat.

12. Verfahren zur Herstellung von Ballen, Rollen, Preßpacken oder dergleichen, dadurch gekennzeichnet, daß nach der Bildung des Ballens (5) in diesen Bearbeitungselemente eingreifen, die in dem Ballen (5) wenigstens eine Vertiefung (9, 10, 10', 11) auf einem entsprechenden Oberflächenbereich des Ballens (5) ausbilden.

13. Verfahren nach Anspruch 11 oder 12, dadurch gekennzeichnet, daß die Bearbeitungselemente (6') in dem Ballen (5) wenigstens eine Vertiefung (10') ausbilden, die einen Hohlraum beliebiger Abmessung und Größe darstellen, der sich innerhalb des Ballens (5) befindet und sich in diesem durch einen Teil seiner Länge erstreckt.

14. Verfahren nach Anspruch 11 oder 12, dadurch gekennzeichnet, daß die Bearbeitungselemente (6') in dem Ballen (5) wenigstens eine Vertiefung (10') herstellen, die aus einem Hohlraum besteht, der beliebige Abmessungen und Formen hat und sich innerhalb des Ballens (5) durch diesen hindurchgehend erstreckt.

15. Verfahren nach Anspruch 11 oder 12, dadurch gekennzeichnet, daß die Bearbeitungselemente (6, 7, 8) an der Außenseite des Ballens (5) wenigstens eine Vertiefung (9, 10, 11) bilden, die aus einer im wesentlichen tangential verlaufenden Furche beliebiger Abmessung und Form besteht und die sich an entsprechenden Bereichen der Außenfläche des Ballens (5) befindet.

16. Verfahren nach Anspruch 11 oder 12, dadurch gekennzeichnet, daß die Bearbeitungselemente (6, 6', 7, 8) so ausgebildet sind, daß sie in oder an dem Ballen (5) wenigstens zwei Vertiefungen (9, 10, 10', 11) ausbilden, welche als in dem Ballen (5) verlaufendes Blindloch (10'), durch den Ballen (5) hindurchgehendes Loch (10') und/oder als Furche (9, 10, 11) ausgebildet sein können, die sich über wenigstens einen Bereich der Außenfläche des Ballens (5) erstreckt.

17. Verfahren nach Anspruch 16, dadurch gekennzeichnet, daß die Bearbeitungselemente (6, 6', 7, 8) solche Abmessungen und geometrische Formen haben, daß sie an dem Ballen unterschiedlich geformte Vertiefungen (9, 10, 10', 11) bilden.

18. Verfahren nach einem der Ansprüche 11 bis 17, dadurch gekennzeichnet, daß eine feste Preßstation (3) vorgesehen ist, welche mit den Bearbeitungselementen (6, 6', 7, 8) ausgerüstet ist.

19. Verfahen nach einem der Ansprüche 11 bis 17, dadurch gekennzeichnet, daß eine bewegliche Preßstation (3) vorgesehen ist, welche mit den Bearbeitungselementen (6, 6', 7, 8) ausgerüstet ist.

20. Verfahren nach Anspruch 18 oder 19, dadurch gekennzeichnet, daß die Preßstation eine Presse (3) mit einer Druckplatte (4) aufweist, die sich in eine Kompressionszone (2) hinein erstreckt, welche von einer Innenwand begrenzt ist, wobei die Bearbeitungselemente wenigstens einen Ansatz (6, 6') oder einen Vorsprung (7, 8) haben, der an der Druckplatte (4) und/oder an der Innenwand angebracht ist.
